# FASCICULE DE BREVET EUROPEEN

(11) **EP 0 979 181 B1**
(45) Date de publication et mention de la délivrance du brevet: **08.12.2004**
(21) Numéro de dépôt: 99906309.2
(22) Date de dépôt: 26.02.1999
(51) Int. Cl.: B60N 3/14

(54) **ALLUME-CIGARES A LANGUETTE DE SECURITE, NOTAMMENT POUR VEHICULE AUTOMOBILE**
SICHERHEITSLASCHEZIGARETTENANZÜNDER, INSBESONDERE FÜR KRAFTFAHRZEUGE
CIGAR LIGHTER WITH SAFETY TAB, IN PARTICULAR FOR MOTOR VEHICLE

(30) Priorité: 27.02.1998 FR 9802388
(43) Date de publication de la demande: 16.02.2000
(73) Titulaire: VALEO VISION, 93000 Bobigny (FR)
(72) Inventeur: BATUT, Pierre-Henry, F-81200 Ausillon (FR); TEXIER, Gérard, F-91600 Savigny sur Orge (FR)
(74) Mandataire: Lemaire, Marc
(86) Numéro de dépôt international: PCT/FR1999/000442
(87) Numéro de publication internationale: WO 1999/043511

(56) Documents cités:
- EP-A- 0 111 282
- FR-A- 2 487 271
- US-A- 4 190 763
- US-A- 4 236 061
- US-A- 4 449 036
- US-A- 4 650 962
- US-A- 5 233 162
- US-A- 5 493 098

## Description

La présente invention se rapporte à un allume-cigares à languette de sécurité, notamment pour véhicules automobiles.

Un tel allume-cigares est décrit dans la demande de brevet français publiée sous le numéro FR-A-2 730 680. Il comprend de façon classique un bouchon chauffant amovible et un corps d'allumage qui reçoit dans une douille le bouchon chauffant selon une direction de montage. Le fond de la douille porte à isolation électrique un bilame. Une différence de potentiel est créée entre le bilame et la douille pour alimentation électrique du bouchon chauffant.

La douille comporte une languette de sécurité (plus précisément un bilame de sécurité dans FR-A-2 730 680), en contact électrique avec le bilame, qui est apte à venir au contact d'une patte liée électriquement avec la douille en cas de surchauffe imprévue en fonctionnement normal. En cas de surchauffe, la languette de sécurité est donc reliée électriquement à la douille ce qui provoque un court-circuit qui entraîne la fonte du fusible prévu dans le véhicule dans le circuit d'alimentation de l'allume-cigares.

On réalise ainsi une protection efficace contre les surchauffes qui ne nécessite pas le démontage de l'allume-cigares pour rétablir son fonctionnement puisqu'il suffit de changer le fusible correspondant au circuit d'alimentation de l'allume-cigares.

On connaît également les brevets US-A-5 493 098 et US-A-5 233 162, qui concernent chacun un allume-cigares décrivant des systèmes de bilame également.

L'invention vise à perfectionner les allumes-cigares de ce type, notamment en réduisant leur encombrement axial selon la direction de montage, tout en protégeant davantage la languette de sécurité des agressions extérieures qu'elle pourrait subir (poussières, cendres, détérioration mécanique, etc.).

Pour ce faire, l'invention propose un allume-cigares du type précédemment décrit dans FR-A-2 730 680 ou FR-A-2 730 679 et présentant les caractéristiques techniques énoncées dans le préambule de la revendication 1, caractérisé en ce que la languette de sécurité s'étend dans l'espace de sécurité essentiellement transversalement à la direction de montage.

Avantageusement,
- le contact de sécurité est en contact électrique avec le bilame ;
- la languette de sécurité est réalisée d'une pièce avec le bilame ;
- un porte-bilame est interposé entre le fond de la douille et le bilame, le porte-bilame présente au moins un évidement qui débouche dans la face du porte-bilame tournée vers le fond de la douille et la languette de sécurité est reçue dans l'évidement ;
- le porte-bilame comporte dans sa face opposée au fond de la douille au moins un lamage dans lequel est reçu le contact de sécurité ;
- l'évidement débouche dans le lamage par un orifice et ledit orifice est masqué par le contact de sécurité ;
- le contact de sécurité est en appui sur le porte-bilame selon les trois axes ;
- le contact de sécurité est monté dans le corps d'allumage au moyen d'un organe de fixation qui permet également la fixation du bilame, de la languette de sécurité et du porte-bilame sur la douille ;
- l'allume-cigares comprend deux languettes de sécurité symétriques ;
- la languette de sécurité est relié au bilame par une portion dirigée suivant la direction de montage.

Un exemple de réalisation de l'invention va à présent être décrit en référence aux dessins annexés sur lesquels :
- la figure 1 représente une vue en coupe d'une partie d'un allume-cigares conforme aux enseignements de l'invention ;

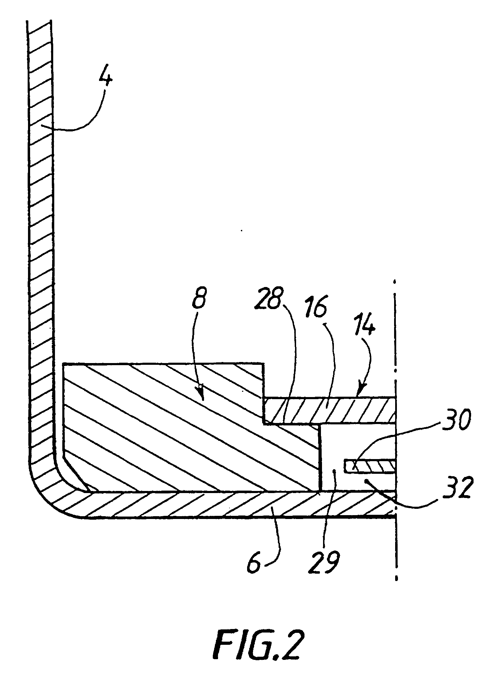

- la figure 2 est la section selon la ligne II-II de la figure 1 ;
- la figure 3 est une vue en éclaté du corps d'allumage d'un allume-cigares conforme aux enseignements de l'invention.

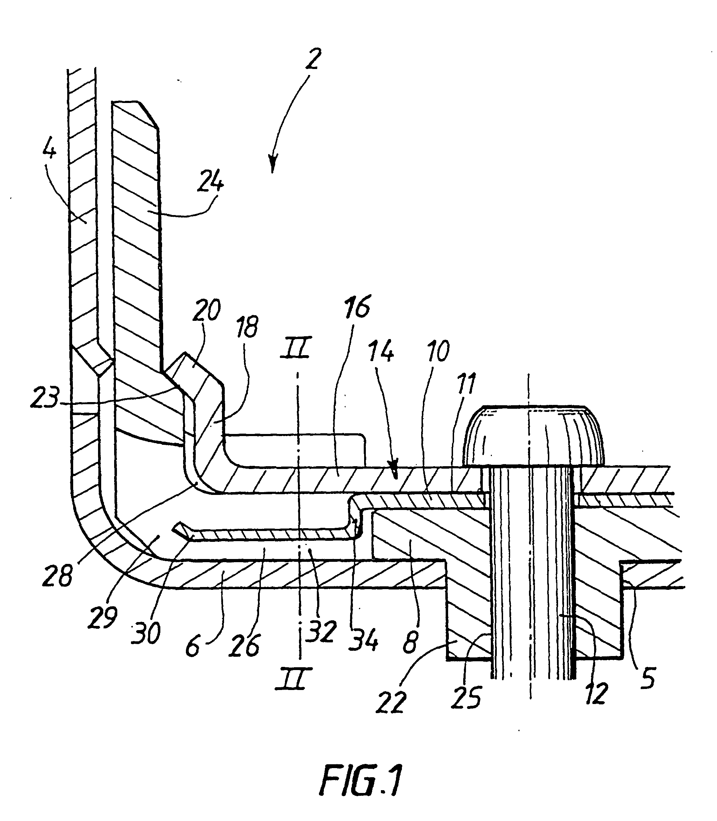

L'allume-cigares dont une partie est représentée à la figure 1 comprend de façon classique un bouchon chauffant amovible et un corps d'allumage 2 qui reçoit dans une douille 4 le bouchon chauffant selon une direction de montage. Le fond 6 de la douille 4 porte intérieurement à isolation électrique un bilame 10.

Selon une conception classique, exposée par exemple dans le document FR-A-2 730 680 auquel on pourra se référer pour plus de détails, le bouchon chauffant comprend une coupelle chauffante en prise dans le bilame 10 lors des phases de chauffe et éloignée du bilame 10 par des moyens de rappel tels qu'un ressort en dehors des phases de chauffe.

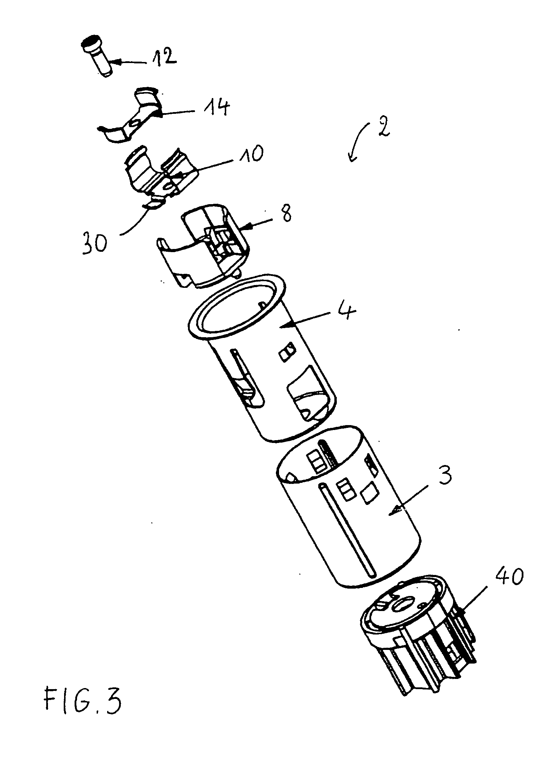

Tel qu'il est représenté à la figure 3 le corps d'allume-cigares 2 comprend un écran thermique ou douille de masquage 3 qui reçoit la douille 4, comme décrit dans la demande de brevet FR-A-2 730 679.

Une pièce d'isolation électrique 8, appelée porte-bilame et généralement réalisée en thermodur, est interposée entre le bilame 10 et le fond de la douille 6. La douille 4, le porte-bilame 8 et le bilame 10 sont réunis par un organe de fixation 12, ici une vis disposée axialement selon la direction de montage. Cet organe de fixation 12 permet en général également la fixation de deux pièces d'alimentation électrique du connecteur 40 liées électriquement l'une à la douille 4, l'autre au bilame 10, pièces d'alimentation entre lesquelles on applique une différence de potentiel existant entre deux câbles du circuit d'alimentation électrique du véhicule. L'organe de fixation 12 est en contact électrique avec le bilame 10 et isolé électriquement de la douille 4 au moyen du porte-bilame 8.

Dans le corps d'allumage, il existe ainsi une différence de potentiel entre le bilame 10 et la douille 4, qui est transmise par contact au bouchon chauffant et appliquée à une résistance chauffante du bouchon chauffant.

L'allume-cigares selon l'invention comporte un contact de sécurité 14 en matériau conducteur. Ce contact de sécurité 14 est monté dans le fond 6 de la douille 4, au contact du bilame 10, de préférence au contact de la face 11 du bilame opposée au porte-bilame. Comme le bilame 10, le contact de sécurité 14 est fixé sur la douille 4 au moyen de l'organe de fixation 12 précité.

La partie principale (centrale) 16 du contact de sécurité 14 s'étend transversalement à la direction de montage, de préférence à angle droit de la partie centrale du bilame 10.

Le contact de sécurité 14 comporte en outre deux parties extrêmes 18 qui s'étendent essentiellement selon la direction de montage et sont dirigées à l'opposé du fond 6 de la douille 4. Les parties extrêmes 18 sont par exemple réalisées par pliage.

Les parties extrêmes 18 du contact de sécurité 14 sont terminées par des extrémités qui s'étendent à 45°, vers les parois latérales de la douille 4 et à l'opposé du fond 6 de la douille.

Le porte-bilame 8 est une pièce de forme complexe. En coupe dans un plan contenant la direction de montage et s'étendant selon la direction principale du contact de sécurité 14, le porte-bilame 8 forme essentiellement un U dont la concavité est tournée à l'opposé du fond 6 de la douille et dont les branches 24 sont essentiellement parallèles aux parois latérales de la douille 4.

Le fond 26 du porte-bilame 8 s'étend parallèlement au fond 6 de la douille et est en contact avec celui-ci. Le fond 26 du porte-bilame 8 comporte un appendice 22 qui s'étend selon la direction de montage à travers un orifice 5 pratiqué dans le fond 6 de la douille pour le passage de l'organe de fixation 12. Le porte-bilame comporte lui-même un alésage 25 débouchant, réalisé selon la direction de montage, qui reçoit l'organe de fixation 12. Le porte-bilame, notamment au niveau de l'appendice, réalise l'isolation électrique entre l'organe de fixation 12 (relié électriquement au bilame 10) et la douille 4.

Le fond 26 du porte-bilame comporte sur sa face tournée à l'opposé du fond 6 de la douille des lamages 28 dans lesquels est reçu la partie principale 16 du contact de sécurité 14. Ces lamages permettent un ajustement de la position du contact de sécurité 14 par rapport au porte-bilame 8 selon une direction perpendiculaire à la direction de montage et à la direction principale du contact de sécurité 14.

Dans leur partie inférieure les branches 24 du porte-bilame réalisent chacune une zone d'appui 23 sur laquelle l'extrémité 20 correspondante du contact de sécurité 14, réalisée à 45° comme vu précédemment, vient en appui. Le contact de sécurité 14 est donc en appui sur le porte-bilame selon les trois axes.

Le porte-bilame 8 présente également des évidements 29 dans les parties latérales de son fond 26 qui débouchent dans la face du porte-bilame tournée vers le fond 6 de la douille 4. Les évidements 29 s'étendent selon la direction principale du contact de sécurité 14. Perpendiculairement à cette même direction et à la direction de montage, les évidements 29 sont moins larges que le contact de sécurité 14. Les évidements 29 débouchent dans les lamages 28 qui reçoivent le contact de sécurité 14 au niveau d'orifices qui sont par construction masqués par le contact de sécurité 14.

Les évidements 29 réalisent un espace de sécurité 32 selon la direction de montage entre le contact de sécurité 14 et le fond 6 de la douille. Du fait de la construction décrite ci-dessus et comme bien visible sur les figures, l'espace de sécurité 32 est particulièrement à l'abri des agressions extérieures, tels notamment les poussières, les cendres ou mêmes les détériorations mécaniques (utilisation malencontreuse d'un tournevis par exemple).

L'allume-cigares selon l'invention comporte également au moins une languette de sécurité 30 qui s'étend à l'intérieur de l'espace de sécurité 32. La languette de sécurité 30 est donc placée entre le contact de sécurité 14 et la fond 6 de la douille.

La languette de sécurité 30 est un bilame essentiellement perpendiculaire à la direction de montage et parallèle à la direction principale du contact de sécurité 14. La languette de sécurité 30 sera ainsi de préférence perpendiculaire à la direction principale du bilame. Avantageusement et comme représenté sur la figure 1, la languette de sécurité 30 est réalisé d'une pièce avec le bilame 10.

En cas de surchauffe, la languette de sécurité 30 se déplacera vers la fond 6 de la douille et provoquera un court-circuit, ce qui entraînera la fonte du fusible associé à l'allume-cigares et ainsi la mise hors tension de l'allume-cigares.

La languette de sécurité 30 est relié au bilame 10 par une portion 34 dirigée suivant la direction de montage. Cette portion 34 est limitée à ses extrémités par deux coudes, le premier coude reliant ladite portion 34 au bilame 10, le second coude reliant ladite portion 34 à la languette de sécurité 30. Ainsi la languette de sécurité 30 s'étend principalement dans une région centrale de l'espace de sécurité 32. Le mouvement de la languette de sécurité 30 nécessaire pour provoquer un court-circuit en cas de surchauffe pourra ainsi être limité.

Il est intéressant de remarquer en outre que la distance d séparant la languette de sécurité 30 du fond 6 de la douille est obtenue en retranchant l'étendue e de ladite portion 34 à l'épaisseur E du porte-bilame séparant le fond 6 de la douille du bilame 10 (d = E - e). Or E et e sont des côtes outils. La répétabilité de la distance d sera donc optimale, et ce d'autant plus que ladite portion s'étend selon la direction de montage.

La languette de sécurité 30 est particulièrement bien protégée des agressions extérieures, en premier lieu par le contact de sécurité 14, mais aussi par le porte-bilame 8 et la douille 4, ces trois éléments formant l'espace de sécurité.

On remarque de plus par rapport aux allume-cigares de l'art antérieur que l'encombrement axial suivant la direction de montage est très réduit.

De préférence, l'allume-cigares comporte deux languettes de sécurité symétriques. La réalisation du court-circuit est ainsi assurée même en cas de défaillance d'une des languettes de sécurité.

On pourra également prévoir des bossages dans le fond 6 de la douille pour faciliter le réalisation du court-circuit.

La description qui précède ne représente bien entendu qu'un mode de réalisation de l'invention qui ne s'y limite pas.

## Revendications

1. Allume-cigares, notamment pour véhicule automobile, comprenant un bouchon chauffant amovible et un corps d'allumage (2) comportant une douille d'allumage (4) dans laquelle est reçu le bouchon chauffant selon une direction de montage et dont le fond (6) porte à isolation électrique un bilame (10), une différence de potentiel existant entre la douille (4) et le bilame (10) pour alimentation électrique du bouchon chauffant, du type comportant une languette de sécurité (30) en contact électrique avec le bilame (10) et apte être reliée électriquement à la douille (4) en cas de surchauffe, ledit allume-cigares comprenant un contact de sécurité (14) qui s'étend essentiellement transversalement à la direction de montage, ce contact de sécurité (14) et le fond (6) de la douille (4) définissent entre eux selon la direction de montage un espace(32), **caractérisé en ce que** ladite languette de sécurité (30) s'étend dans ledit espace (32), de sécurité, essentiellement transversalement à la direction de montage.

2. Allume-cigares selon la revendication 1, **caractérisé en ce que** le contact de sécurité (14) est en contact électrique avec le bilame (10).

3. Allume-cigares selon la revendication 1 ou 2, **caractérisé en ce que** la languette de sécurité (30) est réalisée d'une pièce avec le bilame (10).

4. Allume-cigares selon l'une des revendications 1 à 3, **caractérisé en ce qu'un** porte-bilame (8) est interposé entre le fond (6) de la douille (4) et le bilame (10), **en ce que** le porte-bilame (8) présente au moins un évidement (29) qui débouche dans la face du porte-bilame (8) tournée vers le fond (6) de la douille (4) et **en ce que** la languette de sécurité (30) est reçue dans l'évidement (29).

5. Allume-cigares selon la revendication 4, **caractérisé en ce que** le porte-bilame (8) comporte dans sa face opposée au fond (6) de la douille (4) au moins un lamage (28) dans lequel est reçu le contact de sécurité (14).

6. Allume-cigares selon la revendication 5, **caractérisé en ce que** l'évidement (29) débouche dans le lamage (28) par un orifice et **en ce que** ledit orifice est masqué par le contact de sécurité (14).

7. Allume-cigares selon la revendication 5 ou 6, **caractérisé en ce que** le contact de sécurité (14) est en appui sur le porte-bilame (8) selon les trois axes.

8. Allume-cigares selon l'une des revendications précédentes, **caractérisé en ce que** le contact de sécurité (14) est monté dans le corps d'allumage (2) au moyen d'un organe de fixation (12) qui permet également la fixation du bilame (10), de la languette de sécurité (30) et du porte-bilame (8) sur la douille (4).

9. Allume-cigares selon l'une des revendications précédentes, **caractérisé en ce qu'**il comprend deux languettes de sécurité (30) symétriques.

10. Alllume-cigares selon la revendication 3, **caractérisé en ce que** la languette de sécurité (30) est relié au bilame (10) par une portion (34) dirigée suivant la direction de montage.

## Patentansprüche

1. Zigarettenanzünder, insbesondere für Kraftfahrzeuge, mit einem abnehmbaren aufheizbaren Steckteil und einem Zündgehäuse (2), das eine Zündbuchse (4) umfasst, in die das aufheizbare Steckteil in einer Montagerichtung gesteckt wird und deren Boden (6) zur elektrischen Isolierung einen Bimetallstreifen (10) trägt, wobei zwischen der Zündbuchse (4) und dem Bimetallstreifen (10) zur elektrischen Versorgung des aufheizbaren Steckteils ein Spannungsunterschied besteht, vom Typ mit einer Sicherheitslasche (30), die mit dem Bimetallstreifen (10) in elektrischem Kontakt ist und bei Überhitzung mit der Zündbuchse (4) elektrisch verbunden zu werden vermag, wobei der Zigarettenanzünder einen Sicherheitskontakt (14) umfasst, der im Wesentlichen quer zur Montagerichtung verläuft, wobei dieser Sicherheitskontakt (14) und der Boden (6) der Zündbuchse (4) in der Montagerichtung zwischen sich einen Raum (32) bilden,
**dadurch gekennzeichnet, dass** sich die Sicherheitslasche (30) in diesem Sicherheitsraum (32) im Wesentlichen quer zur Montagerichtung erstreckt.

2. Zigarettenanzünder nach Anspruch 1,
**dadurch gekennzeichnet, dass** der Sicherheitskontakt (14) mit dem Bimetallstreifen (10) elektrisch in Kontakt ist.

3. Zigarettenanzünder nach Anspruch 1 oder 2,
**dadurch gekennzeichnet, dass** die Sicherheitslasche (30) in einem Stück mit dem Bimetallstreifen (10) ausgeführt ist.

4. Zigarettenanzünder nach einem der Ansprüche 1 bis 3,
**dadurch gekennzeichnet, dass** ein Bimetallstreifen-Träger (8) zwischen dem Boden (6) der Zündbuchse (4) und dem Bimetallstreifen (10) angeordnet ist, dass der Bimetallstreifen-Träger (8) wenigstens eine Aussparung (29) aufweist, die in die Seite des Bimetallstreifen-Trägers (8) mündet, die zum Boden (6) der Zündbuchse (4) gewandt ist, und dass die Sicherheitslasche (30) in der Aussparung (29) angeordnet ist.

5. Zigarettenanzünder nach Anspruch 4,
**dadurch gekennzeichnet, dass** der Bimetallstreifen-Träger (8) auf seiner dem Boden (6) der Zündbuchse (4) entgegengesetzt gelegenen Seite wenigstens eine Vertiefung (28) aufweist, in der der Sicherheitskontakt (14) angeordnet ist.

6. Zigarettenanzünder nach Anspruch 5,
**dadurch gekennzeichnet, dass** die Aussparung (29) durch eine Öffnung in der Vertiefung (28) mündet und dass diese Öffnung von dem Sicherheitskontakt (14) verdeckt ist.

7. Zigarettenanzünder nach Anspruch 5 oder 6,
**dadurch gekennzeichnet, dass** der Sicherheitskontakt (14) längs den drei Achsen auf dem Bimetallstreifen-Träger (8) aufliegt.

8. Zigarettenanzünder nach einem der vorhergehenden Ansprüche,
**dadurch gekennzeichnet, dass** der Sicherheitskontakt (14) im Zündgehäuse (2) mittels eines Befestigungsorgans (12) angebracht ist, das auch die Befestigung des Bimetallstreifens (10), der Sicherheitslasche (30) und des Bimetallstreifen-Trägers (8) auf der Zündbuchse (4) ermöglicht.

9. Zigarettenanzünder nach einem der vorhergehenden Ansprüche,
**dadurch gekennzeichnet, dass** er zwei symmetrische Sicherheitslaschen (30) aufweist.

10. Zigarettenanzünder nach Anspruch 3,
**dadurch gekennzeichnet, dass** die Sicherheitslasche (30) mit dem Bimetallstreifen (10) durch einen Abschnitt (14) verbunden ist, der in der Montagerichtung ausgerichtet ist.

## Claims

1. Cigar lighter, in particular for a motor vehicle, comprising a removable heating plug and a lighting body (2) having a lighting socket (4) in which the heating plug is received in an assembly direction and the bottom (6) of which carries, with electrical insulation, a bimetallic strip (10), a potential difference existing between the socket (4) and the bimetallic strip (10) for supplying electric power to the heating plug, of the type having a safety tab (30) in electrical contact with the bimetallic strip (10) and capable of being electrically connected to the socket (4) in the event of overheating,
the said cigar lighter comprising a safety contact (14) extending essentially transversely to the assembly direction, this safety contact (14) and the bottom (6) of the socket (4) defining a space (32) between them in the assembly direction, **characterised in that** the said safety tab (30) extends into the said safety space (32) essentially transversely to the assembly direction.

2. Cigar lighter according to Claim 1, **characterised in that** the safety contact (14) is in electrical contact with the bimetallic strip (10).

3. Cigar lighter according to Claim 1 or 2, **characterised in that** the safety tab (30) is integral with the bimetallic strip (10).

4. Cigar lighter according to one of Claims 1 to 3, **characterised in that** a bimetallic strip holder (8) is interposed between the bottom (6) of the socket (4) and the bimetallic strip (10), **in that** the bimetallic strip holder (8) has at least one recess (29) which opens out into the face of the bimetallic strip holder (8) turned towards the bottom (6) of the socket (4) and **in that** the safety tab (30) is received in the recess (29).

5. Cigar lighter according to Claim 4, **characterised in that** the bimetallic strip holder (8) has, in its face opposite the bottom (6) of the socket (4), at least one countersink (28), in which the safety contact (14) is received.

6. Cigar lighter according to Claim 5, **characterised in that** the recess (29) opens out into the countersink (28) through an orifice and **in that** the said orifice is masked by the safety contact (14).

7. Cigar lighter according to Claim 5 or 6, **characterised in that** the safety contact (14) bears on the bimetallic strip holder (8) along the three axes.

8. Cigar lighter according to one of the preceding claims, **characterised in that** the safety contact (14) is mounted in the lighting body (2) by means of a fixing element (12) which also enables the fixing of the bimetallic strip (10), the safety tab (30) and the bimetallic strip holder (8) onto the socket (4).

9. Cigar lighter according to one of the preceding claims, **characterised in that** it comprises two symmetrical safety tabs (30).

10. Cigar lighter according to Claim 3, **characterised in that** the safety tab (30) is linked to the bimetallic strip (10) by a portion (34) directed in the assembly direction.
